# EUROPEAN PATENT APPLICATION

(11) **EP 2 363 043 A1**
(43) Date of publication of application: **07.09.2011**
(21) Application number: 09824659.8
(22) Date of filing: 06.08.2009
(51) Int. Cl.: A47C 7/16, A47C 5/00, A47C 5/12, B29C 45/14

(54) **METHOD FOR MANUFACTURING PATTERNED CHAIR AND PATTERNED CHAIR MANUFACTURED BY THAT MANUFACTURING METHOD**

(30) Priority: 07.11.2008 JP 2008286144
(71) Applicant: Yoshino, Toshiyuki, Tokyo 158-0095 (JP)
(72) Inventor: Yoshino, Toshiyuki, Tokyo 158-0095 (JP)
(74) Representative: Modiano, Micaela Nadia
(86) International application number: PCT/JP2009/063944
(87) International publication number: WO 2010/052959

(57) **Abstract**

The present invention has an object to provide a graphic chair having a fine graphic, wherein the chair is made of a transparent material, the graphic can be clearly seen from any side of the material, and the graphic is not damaged by mechanical contact from both sides; and to provide a graphic chair with a personalized design producible cheaply even if the system of producing various kinds of products in small lots is employed. The foregoing objects could be achieved by a method for manufacturing a graphic chair, whose at least any one of a seat part and a backrest part or both consist(s) of a substrate having a configuration of both sides of the graphic sandwiched by transparent resin A and transparent resin B, wherein the substrate is obtained by carrying out Step (1) in which a film having the printed graphic is inserted into a mold at the time of injection molding of transparent resin A and then the graphic printed on the film is transcribed to surface of transparent resin A in the mold, simultaneously with injection molding of transparent resin A, and thereafter carrying out Step (2) in which a mold half to which side the film having the printed graphic is inserted is moved backward to form a space between the mold and the graphic on transparent resin A and then transparent resin B is injection molded in the space.

## Description

### Technical Field

The present invention relates to a method for manufacturing a graphic chair, more specifically to a method for manufacturing a graphic chair consisting of a substrate having a configuration that both sides of a graphic printed on a film is sandwiched by transparent resins and to a graphic chair manufactured by the method.

### Background Art

It was in 1990's when chairs made of plastics became popular. They were spread from the furniture industry of Italy, which had a world market of furniture, to the entire world by taking advantage of a unique configuration due to high plasticity polypropylene and a low price. Their sales were centered in the contract market aiming a mass order at a time; and thus, the characteristics of this type of chairs had been resided in a low price and a simple form.

Integral molding from the legs to the backrest without using metal legs had been attempted. Because the structure was made of only plastics, the leg part and the skeleton part were molded to have a hollow structure by a gas injection in order to strengthen the structure part; but in this gas injection technology, texture of polypropylene was not good in spite of a high cost of the required large molding machine with 1200 ton or higher, so that there has been a case that it sales was sometimes difficult in the design chair market where the product image was important.

On the other hand, putting priority on the texture, Kartell Corporation in Italy introduced a colorless and transparent integral chair by displacing its material from polypropylene to polycarbonate. However, this chair had a problem in rigidity because the gas injection could not be used due to fluidity and transparency of polycarbonate; nevertheless, it became a hit product as "a transparent chair "in a novelty-loving design market. Thereafter, a material having transparency of polycarbonate along with flexibility of polypropylene was developed so that even an integrally molded transparent chair by using a gas injection appeared.

However, when an attempt was made to obtain a chair by the gas injection method, in spite of development of the resins as mentioned above, a integrally molded chair made of any plastics had a strong image of a cheap outdoor garden chair in its nature; and thus, there was a problem not to worth the investment of the large molding machine.

On the other hand, around 2005, Arper Corporation in Italy made a big hit product in the contract market by producing a plastic chair having different colors between inside and outside of the seat by a two-color molding method. Thereafter, MAXDESIGN Corporation integrated the transparent polycarbonate material with the two-color molding technology. A product from Arper Corporation had two colors of opaque polypropylene, while a product from MAXDESIGN Corporation was beautiful because of a transparent plastic effect as well as a plaid design effect. However, although these were fresh in those days, a mold of the two-color molding was expensive; and thus, there was a problem of too high price in the plastic chair market which had been in a cheap image.

On the other hand, there were examples that a substrate having various materials (such as a Japanese paper, a cloth, and a plant) inserted between two transparent acrylic resin plates was vacuum-molded to give a form of "a seat part and a backrest part" of a chair to which metal legs were attached; but any attempt to commercialize such a product was successful.

The reasons for the failure are as follows. That is, firstly, an acryl resin plate, which is a suitable raw material for the vacuum-molding, is too expensive (approximately three to five times more expensive as compared with that for an injection molding). Secondly, a three-dimensional form is difficult to be made; and thus, a complicated form cannot be made. Thirdly, a rib and the like cannot be attached so that legs cannot be attached beautifully. For example, because the legs must be attached by screws by drilling from the upper part of the seat part, the screws are visible in the seat part. Fourthly, only such a material as a Japanese paper, a cloth, and a plant can be inserted. Fifthly, a plate is warped so that thickness of each part becomes roughly the same, or "a warped part from the seat part to the backrest part", where most of the force is loaded, becomes rather thin; thus, the warped part lacks rigidity to cause breakage and delamination thereat.

In recent years, due to development of various products mainly by the foregoing Italian makers, an appeal of a new product of a chair is shifting from a form to a surface detail and a graphic attached thereto; but there are actual barriers in a large cost for manufacturing of a mold as the initial investment and in a high cost and a poor availability of a large two-color molding machine; and thus, not so many plastic chairs are manufactured by the two-color molding method even today. Namely, because a plastic chair is generally recognized as a cheap product in its nature, its sales price as "a plastic chair" has an upper limit no matter how the visual effects are improved; and thus, this has been the utmost weak point of the two-color molding method. Namely, by introduction of the two-color molding method, the effect of graphic as the visual effect was added to the earlier main selling point of a chair, i.e., "a form" obtained by molding. However, there still have been various problems as mentioned above; and in addition, there has been a problem of an increased price of the product.

Accordingly, in order to cheaply obtain a visual effect giving originality to a product, a mold itself, the design of which is complicated, must be made. Further, as far as the same mold is used, there has been a problem of fixing to one design always. In other words, in order to cheaply obtain a visual effect in a chair, the initial investment in manufacturing of the mold could not be recovered unless many of the same form were produced. In addition, if the form of the chair thus produced could not be accepted in the market, the mold itself had to be manufactured again, thereby leading to another problem of a high risk in its cost.

Accordingly, there may be an idea that a graphic is given to a substrate of the chair by completely separating the visual effect from a mold, which makes a form of a chair. By changing a print without changing a mold (form), the system of production of various kinds of products in small lots can be employed; with this, design can be changed in accordance with a use condition and a customer's detailed request so that various designs can be produced from the same mold. This novel "self-expressing style" is settling as a new trend. Printing of various graphics inspires a sense of individuals so that it may become a means to transform one's own message.

However, as to a thick substrate having a three-dimensional form, like a chair, giving a fine graphic to the substrate in a practical way has been difficult. In other words, a high-resolution printing method such as a gravure printing method, an offset printing method, and an anastatic printing method, which are used for printing to a thin substrate such as a paper and a film by using a printing cylinder, cannot inherently be applied to a thick substrate having a three-dimensional form; while a printing method directly printing to a chair (hereinafter abbreviated as "direct printing method"), such as a screen printing method and an ink-jet printing, which are barely applicable in a chair, has extremely poor resolution so that it has been impossible to give a fine graphic to the substrate of a chair.

In addition, when a conventional direct printing method was used, there have been problems of not only poor resolution but also peeling-off of a graphic given to a chair because both sides of the chair were worn out. In addition, there were problems of taking too much time and high cost when a chair having a three-dimensional form was directly printed in a one-by-one basis.

In a design chair field, further improvement in a visual effect is required and matching to a use condition and a user's detailed request is important; in such a field, a method by which only a graphic - a fine graphic with high resolution and high wearing resistance on both sides - can be cheaply replaced is sought, but this has not been attained by today's technologies.

On the other hand, as a method to give a fine graphic having high resolution to a plastic surface, there is "an in-mold decoration method", which was developed in Japan recently. In "an in-mold decoration method", a graphic printed on a film by a high resolution gravure printing method or the like is inserted into a mold and transcribed to a plastic surface by the heat of molding so that a plastic surface may be decorated even with a fine graphic having high resolution by a gravure printing method or the like; and this technology is used to manufacture small parts around an electronics display of mainly a mobile phone or the like (fore example, see Patent Document 1, Patent Document 2, and Patent Document 3).

However, there has been a stereotype that although "an in-mold decoration method" has a characteristic of capable to transcribe even a fine graphic, such a fine graphic is not necessary in a large product like a chair; and thus, the method has not been used in manufacturing of a chair.

In addition, in a product obtained by "an in-mold decoration method", the plastic surface to which side a graphic is given, namely (or), the plastic surface to which side a film having a printed graphic is attached, is extremely weak in mechanical strength; and thus, the method could not have been used in the area where both sides of the plastic surface are grazed, like a chair. In a small part like a mobile phone and the like, it is necessary that the graphic can be seen only from the front side, not from the back side; and thus, the plastic surface given with a graphic, which is a mechanically weak side of the plastic, can be protected by arranging it in the main body side of the product (back side). In a chair, however, both sides of the substrate are exposed to the surface and thus grazed; and in view of such circumstances, "an in-mold decoration method", which is mechanically weak in one side, has not been applied to manufacturing of a chair even though it can realize a graphic having high resolution.

As mentioned above, a product whose design can be changed in accordance with a use condition and a customer's detailed request is strongly demanded along a new trend to produce various kinds of products in small lots; in particular in a chair, a foot mat, a stationary product, and the like, a need to furnish such a product with a customer's unique design such as a name case, a trade mark, and a logo is increasing more than ever; but the heretofore known technologies as mentioned above cannot satisfactorily furnish a plastics with a fine graphic together with a mechanical strength on both sides of the substrate; and thus, emerging of a new technology for it has been desired.

In particular, a plastic design chair having a selling point in beautiful design needs to satisfy the conditions such as precision and beauty of a graphic and a design, rigidity and flexural strength endurable a contract specification, high productivity and low cost, and the like; but until today, there have been no technologies that cleared such conditions.

Patent Document 1: Japanese Patent Laid-Open Publication No. H10-119094
Patent Document 2: Japanese Patent Laid-Open Publication No. 2005-288745
Patent Document 3: Japanese Patent Laid-Open Publication No. 2008-260245

### Disclosure of the Invention

### Problems to be Solved by the Invention

The present invention was made in view of the background art as mentioned above, and a problem to be solved is to provide a method for manufacturing a graphic chair having a fine graphic. Further, a problem is to provide a method for manufacturing a graphic chair, which is composed of a transparent material in any one of its seat part and its backrest part or both, wherein the graphic can be seen clearly with a sense of depth and the like from any side of the material while the graphic attached thereto is not damaged by mechanical contact from both sides of the material in any one of its seat part and its backrest part or both. Still further, a problem is to provide a method for manufacturing a graphic chair wherein a design chair personalized in accordance with each end user's request can be manufactured cheaply even if the system of producing various kinds of products in small lots is employed. Even still further, a problem is to provide a graphic chair by using the manufacturing methods as mentioned above.

### Means for Solving the Problems

The inventor of the present invention carried out an extensive investigation to solve the problems and the subjects mentioned above, and as a result, he found that, if there was a technology to furnish a chair with a high resolution fine graphic in a practically suppressed cost, a chair having a characteristic graphic design could be accepted by an end user and be supplied directly to an end user in a personalized form.

The inventor further found that if an in-mold decoration method, which transcribes a graphic formed by a high resolution film printing, not having been applied to a large product such as a chair, was used, even a large product such as a chair could be manufactured cheaply by the system of producing various kinds of products in small lots by changing only a graphic without changing the mold (form); namely, he found that various kinds of design could be produced from the same mold thereby realizing a personalized design chair.

Here, in the case that a graphic was given to a plastic chair by a usual in-mold decoration method, which was used for a mobile phone and the like, the graphic could be seen beautifully from the transparent resin side because thickness of the film was only in the range of 10 to 20 µm; and thus there have been no problems. However, when it was seen from the film side, the graphic lacked a sense of depth, thereby appearing a problem of tacky impression just like a mere direct printing method.

In addition, in the case that a graphic was given to a plastic chair by an in-mold decoration method, a film having a printed graphic was thin and thus worn out soon; and therefore it became clear that the graphic could not sustain because the chair was grazed each time when a user sat (sustainable for about one week). Further, it became clear that the graphic could not be given to undersurface (back side) of the chair because ribs for connecting the legs were necessary; and in addition, particularly a backside of the chair's backrest, continuously connected from the undersurface of the seat (backside), was grazed by handling of a user and collision of chairs when they were stacked, and thus, similar to the above-mentioned, the graphic could not sustain.

In view of the foregoing, the inventor of the present invention carried out an extensive investigation to solve the problems mentioned above, and as a result, he could solve the foregoing problems and subjects, and thereby accomplished the present invention when he found that a graphic chair, whose graphic could be seen clearly from any side of the chair with a sense of depth and the like and was not damaged by mechanical impact in any side of the chair, could be manufactured by synergistically combining specific two processes.

That is, the present invention provides a method for manufacturing a graphic chair, whose at least any one of a seat part and a backrest part or both consist(s) of a substrate having a configuration of both sides of the graphic sandwiched by transparent resin A and transparent resin B, wherein the substrate is obtained by carrying out Step (1) in which a film having the printed graphic is inserted into a mold at the time of injection molding of transparent resin A and then the graphic printed on the film is transcribed to surface of transparent resin A in the mold, simultaneously with injection molding of transparent resin A, and thereafter carrying out Step (2) in which a mold half to which side the film having the printed graphic is inserted is moved backward to form a space between the mold and the graphic on transparent resin A and then transparent resin B is injection molded in the space.

In addition, the present invention provides a graphic chair characterized in that the chair is manufactured by the method mentioned above.

### Advantages

According to the present invention, by settling and solving the foregoing problems and subjects, "a graphic chair" whose graphic arranged in the center of transparent resin layers can be seen clearly with a sense of depth from any side of the substrate through the transparent resins, that is, "a graphic chair" any side of which has a glossy surface and thus can be recognized as "the front side" can be provided. In addition, because the graphic is arranged not on the substrate surface by a direct printing method or the like but in a center part (layer) between two transparent resin layers, "a graphic chair" whose graphic is not damaged by mechanical contact from both sides of the substrate can be provided. Further, "a graphic chair" furnished with a fine graphic such as a picture and letters, a graphic by a vapor-deposited metal, and a three-dimensional holography, which cannot be usually arranged in large furniture like a chair, can be provided. In addition, even the system of producing various kinds of products, having a corporate trade mark, logo, or the like for each end user, in small lots can be realized cost-effectively.

Further, the design element of a chair can be resided not in a form or a color of the chair main body but in the graphic so that graphic chairs having different designs can be manufactured from the same mold. In addition, a film having a printed graphic is changed without changing a mold which is expensive to make so that cost-cut per one chair may be possible even if the system of producing various kinds of products in small lots is employed. As a result, taking advantage of the characteristic that chairs having different designs can be manufactured in small lots from the same mold, a chair having a personalized design precisely in accordance with an aim and a taste of a user can be provided. Further, a new business area called "a plastic design chair with order-made design" can be created by the direct contact of an end user and a maker.

A chair is usually supplied through a distribution channel of a maker, a wholesale dealer, a retail store, and a user. On the other hand, a personalized design chair can be manufactured with a design that reflects an end-user's demand from the beginning thereby enabling to directly connect a maker with an end-user so that further cost-cutting may become possible and a chair matching to an end-user may be provided. In addition, a chair as an interior product having a high fashionability of a new design in each season may be provided. Sales of a chair is made by the direct selling system so that the distribution system may be revolutionarily simplified thereby leading to substantial cost-cutting in distribution; and thus, the distribution system may be fundamentally changed.

### Brief Description of Drawings

[FIG. 1]

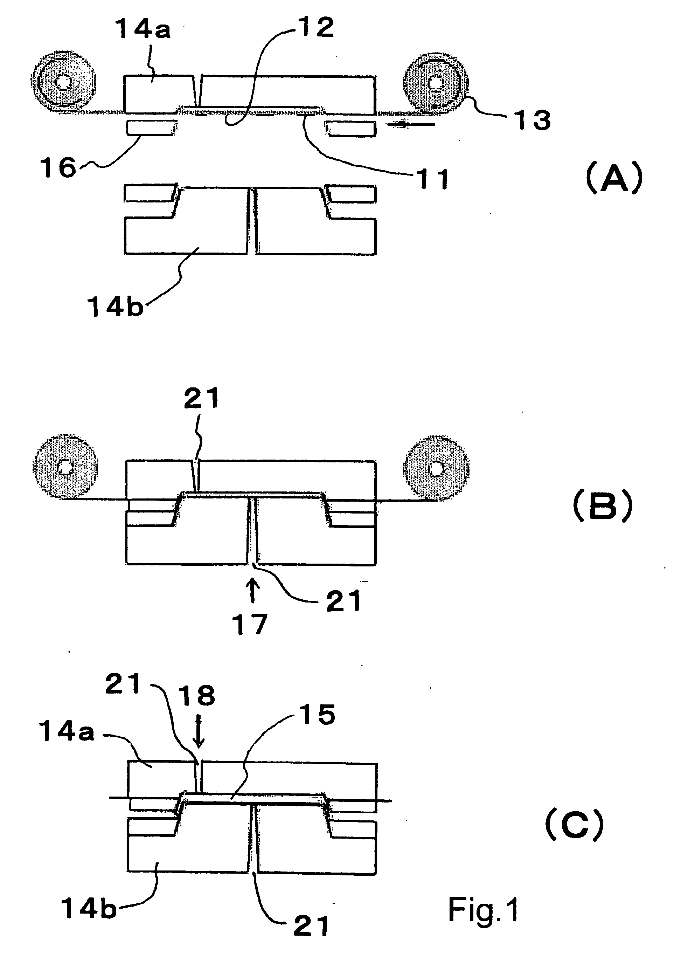

   FIG. 1 is cross-section views showing outline of Step (1) and Step (2) in the method for manufacturing a graphic chair of the present invention.
   (A): this is a diagram showing the state that a film having a printed graphic is inserted (rolled-in) on a mold before injection molding of transparent resin A.
   (B): this is a diagram showing the state of injection molding of transparent resin A after clamping the mold.
   (C): this is a diagram showing the sate that a mold half is moved backward to make a space between the mold and transparent resin A given with a graphic.
[FIG. 2]

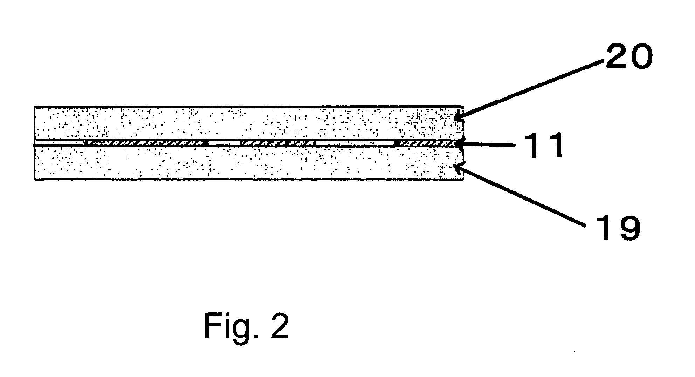

   FIG. 2 is a diagram showing a schematic cross section view of a part of a graphic chair manufactured by the method of the present invention.
[FIG. 3]

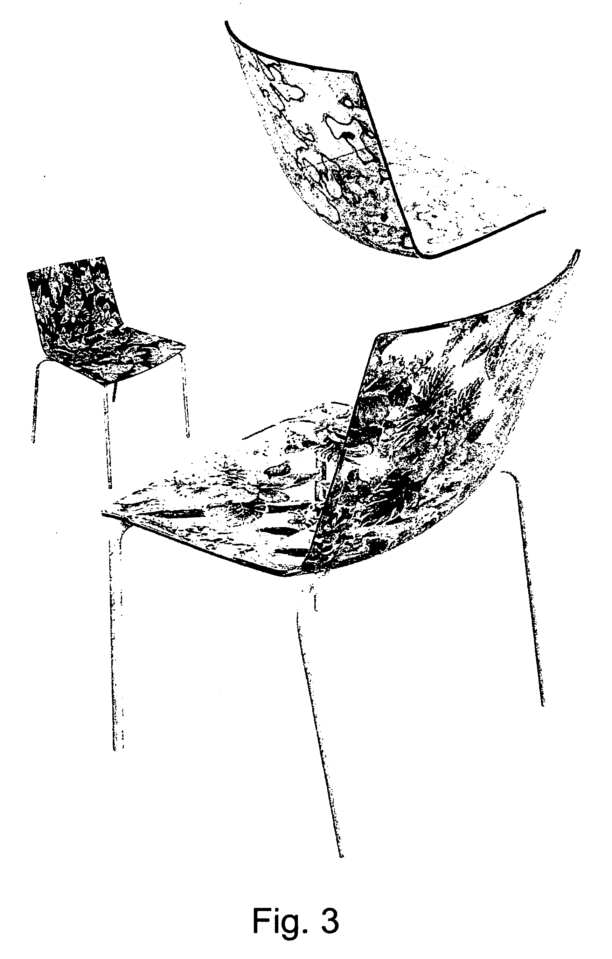

   FIG. 3 shows examples of a graphic chair manufactured by the method of the present invention.
[FIG. 4]

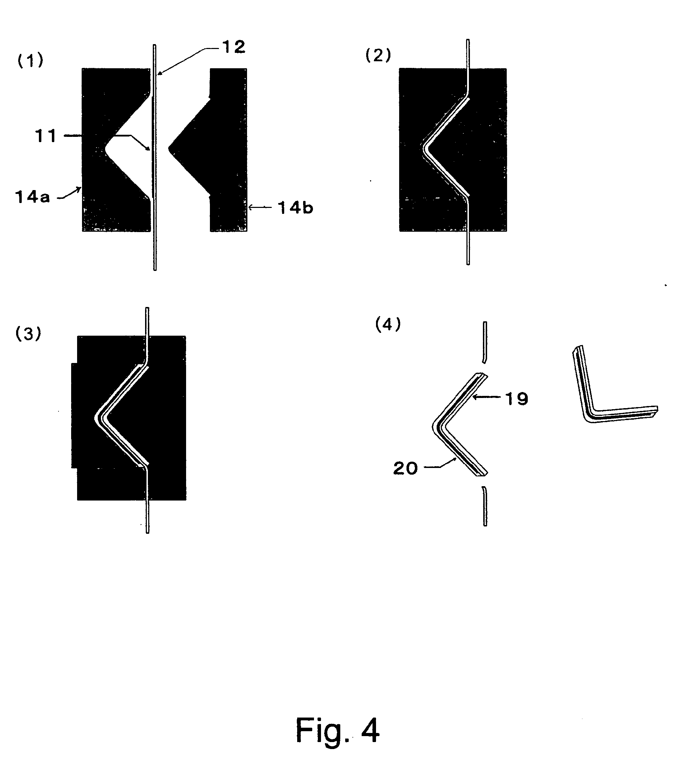

   FIG. 4 shows cross section views of one example of the manufacturing process of Example 1.
   (1) this is a cross section view of the state when a film having a printed graphic is inserted between two mold halves.
   (2) this is a cross section view of the state after transparent resin A is injection molded in Step (1).
   (3) this is a cross section view of the sate after transparent resin B is injection molded in Step (2).
   (4) this is a cross section view of the state after an extra film is cut off.
[FIG. 5]

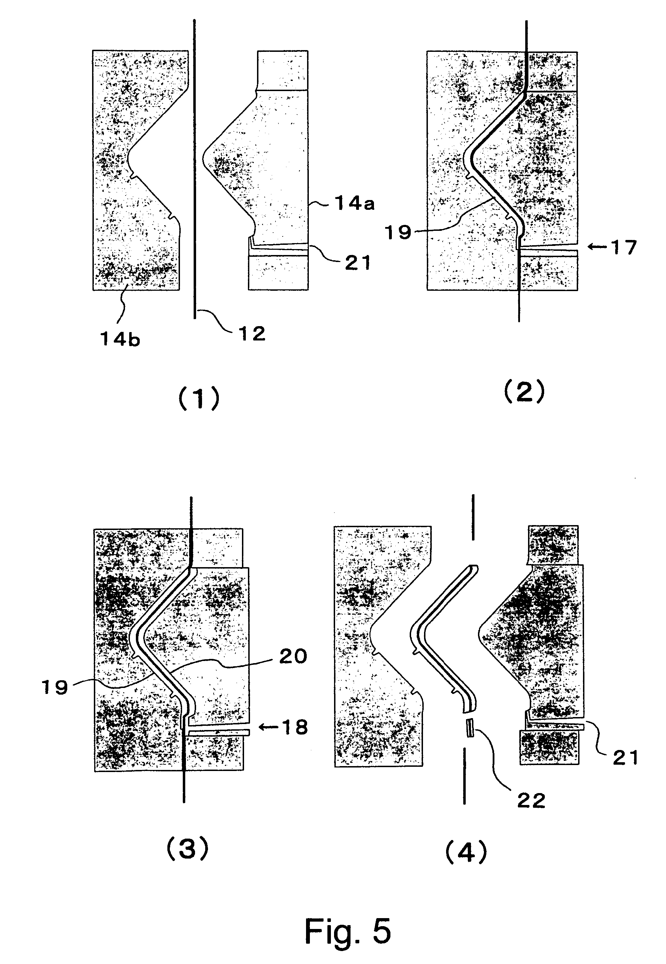

   FIG. 5 shows cross section views of one example of the manufacturing process in Example 2, wherein there is one injection gate thereby injecting transparent resin A and transparent resin B through the same injection gate.
   (1) this is a cross section view of the state when a film having a printed graphic is inserted between two mold halves.
   (2) this is a cross section view of the state after transparent resin A is injection molded in Step (1).
   (3) this is a cross section view of the sate after transparent resin B is injection molded in Step (2).
   (4) this is a cross section view of the state after an extra film and a convex portion due to the injection gate are cut off.
[FIG. 6]

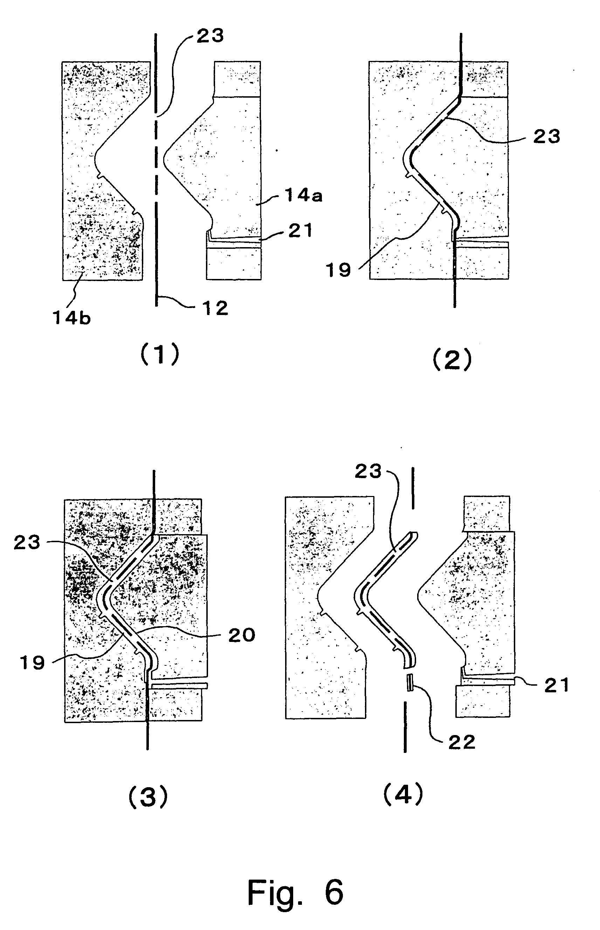

   FIG. 6 shows cross section views of one example of the manufacturing process wherein a film having a printed graphic has holes through which transparent resin A and transparent resin B are connected and adhered.
   (1) this is a cross section view of the state when a film having a printed graphic is inserted between two mold halves.
   (2) this is a cross section view of the state after transparent resin A is injection molded in Step (1).
   (3) this is a cross section view of the sate after transparent resin B is injection molded in Step (2).
   (4) this is a cross section view of the state after an extra film and a convex portion due to the injection gate are cut off.

### Reference Numerals

- 11: Graphic
- 12: Film having a printed graphic
- 13: Film roll
- 14a: Mold (to be moved backward in Step (2))
- 14b: Mold (the side of transparent resin A in Step (1))
- 15: Space
- 16: Film-holding plate
- 17: Transparent resin A
- 18: Transparent resin B
- 19: First layer
- 20: Second layer
- 21: Injection gate
- 22: Convex portion due to injection gate
- 23: Holes

### Modes for Carrying Out the Invention

Hereinafter the present invention will be explained, but the present invention is not limited to the following specific modes and thus can be arbitrarily modified within the technical scope.

"A graphic chair", an object of the manufacturing method of the present invention, is composed of "a substrate having a configuration of both sides of a graphic sandwiched between transparent resin A and transparent resin B" (hereinafter this may sometimes be abbreviated as "the graphic substrate") in at least any one of the seat part and the backrest part or both of the chair. It is indispensable that at least any one of the seat part and the backrest part or both of "a graphic chair" be composed of the graphic substrate, while the chair's leg part may be or may not be composed of the graphic substrate. In view of easy application of Step (1) and Step (2) of the manufacturing method of the present invention, which will be mentioned later, it is preferable that the chair's leg part be not composed of the graphic substrate.

The chair's leg part may be composed of only any one of transparent resin A and transparent resin B or both, wherein the graphic is not sandwiched by the resins. In other words, a chair may be integrally molded with a leg part by injection molding of any one of transparent resin A and transparent resin B or both without using a film having a printed graphic in its leg part. Alternatively, a separately obtained leg may be fixed after any one of the seat part and the backrest part or both is (are) obtained. In this case, a material of the separately obtained leg is not particularly restricted.

It is indispensable that at least any one of the seat part and the backrest part or both of "a graphic chair" be composed of the foregoing substrate, but any only one of the seat part and the backrest part may be composed of the foregoing substrate. In addition, the seat part and the backrest part may be integrated to one body by connecting with a gentle curve, or they may be separately formed by the method of the present invention. Alternatively, a chair having only the backrest part may be allowed. As shown in FIG. 3, manufacturing of the chair whose seat part and backrest part are integrated to one body by connecting with a gentle curve can be completed with one pair of the injection molding (Step (1) and Step (2), as mentioned later) because of the integration; in this case, the integration with a gentle curve is preferable because the transparent resins can be spread smoothly to the seat part and the backrest part so that the injection molding may be carried out easily. In addition, depending on the designers, a chair with an excellent design may be manufactured easily.

As shown in FIG. 2, the substrate that constitutes any one of the seat part and the backrest part or both has a configuration of both sides of the graphic being sandwiched between transparent resin A and transparent resin B. By sandwiching the graphic by the transparent resins, the graphic can be seen clearly and with a sense of depth through the transparent resin layers from any side of the substrate, namely from above or bottom, or from front or back, of the chair. In addition, according to the manufacturing method of the present invention, both surfaces of the transparent resins (not a surface of the film having a printed graphic nor a surface of a graphic, but a surface of the resin) can be made glossy so that both sides can be regarded as "the front surface" because any surface is glossy.

The graphic is not on surface of the substrate by a direct printing method such as a screen printing method and an ink-jet printing method but is sandwiched between transparent resin A and transparent resin B; and thus, the graphic is not damaged by mechanical contact from both sides of the substrate. In other words, in "a graphic chair" of the present invention, the graphic is not substantially exposed to surface of any side of the substrate that constitutes the graphic chair (or not exposed via a thin film having thickness of several ten micrometers) so that the graphic may not be worn out by usual use conditions of a chair.

The manufacturing method of the present invention is characterized in that the substrate having the foregoing configuration is manufactured by the following Step (1) and Step (2) cooperatively. After Step (1), Step (2) is carried out.
Step (1): a step in which a film having a printed graphic is inserted into a mold at the time of injection molding of transparent resin A and then a graphic printed on the film is transcribed to surface of transparent resin A in the mold, simultaneously with injection molding of transparent resin A.
Step (2): a step in which a mold half to which side the film having a printed graphic is inserted is moved backward to form a space between the mold and the graphic on transparent resin A and then transparent resin B is molded by injection molding in the space.

In FIG. 1 (A) and FIG. 1 (B), outline of Step (1) is shown. Film 12 having printed graphic 11 is rolled-in film roll 13. A respective portion of "film 12 having printed graphic 11" for each injection molding of transparent resin A is inserted to mold 14a (FIG. 1 (A)).

As to insertion of "film 12 having the printed graphic", "film 12 having the printed graphic" that is rolled-in film roll 13 may be inserted in the way as shown in FIG. 1, or a leaf type (not a roll type) of "film 12 having the printed graphic" may be inserted one by one sheet. Alternatively, "film 12 having the printed graphic" that is made previously to fit the inner shape of mold 14a may be inserted. In this case, as far as "film 12 having the printed graphic" is thin, "film 12 having the printed graphic" may not be restricted to be in a completely flat form.

Here, a printing method of the graphic on the film is not particularly limited; for example, any of general printing methods with high resolution, such as a gravure printing method, an offset printing method, and an anastatic printing method may be suitably used.

Because the printing method with high resolution can be used, it becomes possible to transmit, in addition to a low resolution graphic and a color by a direct printing method to print directly on a chair, a design which could not be incorporated into a chair, such as an artistic value, a literary value, a commercial message, a journalism, and a visual illusion, including a photographic picture, letters, a painting, a corporate's trade mark and logo, and a holography; with this, a sense of existence of a chair in a commercial space and a value of a chair as a commercial good can be changed drastically.

Thereafter, the mold is clamped tightly and then transparent resin A is injection molded from injection gate 21 (FIG. 1 (B)). When the transparent resin becomes a solid state, "film 12 having printed graphic 11" is transcribed onto surface of transparent resin A. That is, "film 12 having printed graphic 11" is transcribed onto surface of transparent resin A in mold 14 a and mold 14b at the same time of injection molding of transparent resin A.

Here, after graphic 11 is transcribed onto surface of transparent resin A, it may be allowed to leave only graphic 11 on surface of transparent resin A by removing film 12. In other words, at least graphic 11 is transcribed onto surface of transparent resin A in mold 14 at the same time of injection molding of transparent resin A.

In the case of the embodiment that film 12 having printed graphic 11 remains between transparent resin A and transparent resin B, it is preferable that, in film 12 having the printed graphic, holes 23 be formed in the area not having graphic 11 so that portions where transparent resin A and transparent resin B are adhered may be formed, as shown in FIG. 6. Because of existence of these holes, peeling-off of the substrate at film 12 by the deformation due to the force to the manufactured graphic chair can be prevented from occurring; thus, strength of the manufactured chair can be increased. In other words, in the method for manufacturing a graphic chair of the present invention, it is preferable that, in view of prevention of peeling-off or the like of the substrate from occurring, the holes be made in "film 12 having the printed graphic" to be inserted into mold 14 at the time of injection molding so that transparent resin A and transparent resin B may be connected and adhered thorough the holes.

It may be enough for transparent resin A to have such degree of transparency that the graphic can be substantially seen so that complete transparency may not be necessary (for example, transmittance of 50% or more in the visible light wavelength); but, it is preferable that transmittance be 50% or more in the wavelength having at least a visible region so that the merits of the present invention may become further advantageous. In addition, the resin may not be necessarily colorless and transparent, but it may be colored and transparent. Thickness of transparent resin A after injection molding is not particularly restricted, but preferably in the range from 0.5 to 20 mm, more preferably from 1 to 10 mm, and still more preferably from 2 to 5 mm.

Chemical material of transparent resin A is not particularly restricted if it is substantially transparent; but polyester, polycarbonate, polyethylene, polypropylene, polyvinyl chloride, poly(meth)acrylate, polystyrene, and their copolymers may be included in the example of the material. Among them, polyester or polycarbonate is particularly preferable because of their transparency, mechanical strength, and easiness in injection molding.

Temperature of any one of transparent resin A and transparent resin B or both at the time of injection molding is dependent on the kind of resins, and thus not particularly restricted; the temperature is preferably in the range from 160 to 350°C, more preferably from 180 to 310°C, and still more preferably from 200 to 270°C. When the temperature is too low, the transparent resin may not be softened; when the temperature is too high, film 12 having a printed graphic or an ink for making graphic 11 may be changed by melting or dissolution. Injection pressure is not particularly restricted; usual injection pressure (10 to 3000 kgf/c) can be used.

In Step (1), a method known as "an in-mold decoration method" can be suitably used. Although the method is used in a small electric product such as a mobile phone because even a fine graphic can be transcribed, it can also be used in Step (1) mentioned above. By using the method, a chair having a fine graphic can be manufactured. Printing on a three-dimensional structure such as a chair by a direct printing inevitably leads to low resolution, while a printing method with high resolution, such as a gravure printing method, an offset printing method, and an anastatic printing method, can be used on a thin medium such as a film in an in-mold decoration method. Accordingly, by using an in-mold decoration method, such a high-resolution print graphic can be given to a resin that forms a three-dimensional structure. As far as a large product is concerned, an in-mold decoration method for giving a graphic is particularly suitable for a chair; and thus, the effects can be expressed most eminently when the graphic is given to a chair by the in-mold decoration method, as mentioned before.

If nothing is done after Step (1), the graphic that is printed on the film on one side of the substrate (or the graphic that was printed on the film) is exposed. Accordingly, it can be used as it is in a mobile phone or the like, but not in a chair; because in a chair, a hip of a user hits a top side of the seat when he sits, a back of a user hits a front side of the backrest part, and there may be a chance that the bottom side of the seat and the back side of the backrest part contact with other objects, for example, when the chair is moved. In other words, both sides of the substrate are used under the conditions exposed to a mechanical impact and an abrasion. In addition, unless a transparent resin is on the graphic, the graphic may not be seen clearly.

In the present invention, to make up such drawbacks, Step (2) as shown below is carried out. Firstly, as shown in FIG. 1 (C), mold 14a, to which side "film 12 having printed graphic 11" is inserted, is moved backward to form space 15 between mold 14a and graphic 11 transcribed on transparent resin A, and then transparent resin B is injection molded in space 15 through injection gate 21.

Step (2) is carried out while "transparent resin A having graphic 11 on its one side" obtained in Step (1) is being kept in mold 14a and mold 14b. In other words, the resin thus molded is not taken out once from mold 14a and mold 14b after Step (1). In Step (2), it is preferable that "transparent resin A having graphic 11 on its one side" be kept as it is in the state substantially adhering with mold 14b, as shown in FIG. 1 (C). It is preferable that mold 14a used in Step (2) be the same as mold 14a used in Step (1). That is, it is preferable that the same injection molding machine having the same molds 14a and 14b be used in Step (1) and Step (2).

It may be enough for transparent resin B injected in Step (2) to have such degree of transparency that the graphic can be substantially seen so that complete transparency may not be necessary (for example, transmittance of 50% or more in the visible light wavelength); but, it is preferable that transmittance be 50% or more in the wavelength having at least a visible region so that the merit of the present invention may become further advantageous. In addition, the resin may not be necessarily colorless and transparent, but it may be colored and transparent. Thickness of transparent resin B after the injection molding is not particularly restricted, but preferably in the range from 0.5 to 20 mm, more preferably from 1 to 10 mm, and still more preferably from 2 to 5 mm.

Chemical material for transparent resin B the same as that for the foregoing transparent resin A can be used. The same examples for transparent resin A can be mentioned as the preferable materials for transparent resin B. Chemical material of transparent resin A and chemical material of transparent resin B may be different as the chemical materials of the substrate in one chair; but same material is preferable in view of the same expansion coefficient and shrinking coefficient at the time of manufacturing, no deformation during its use, beautiful appearance, and the like.

There is no restriction in equipment used in Step (2) mentioned above; but it is preferable to use an equipment for a core back expansion molding method in order to suppress initial cost of production of the equipment. Naturally, an equipment for a core back expansion molding method may be somewhat modified so that it may be used in the manufacturing method of the present invention; and thus, a manufacturing method by using the modified equipment may also be included in the present invention. Incidentally, Step (2) closely resembles operational means of a core back expansion molding method, so that at least a technique to move the mold (move backward) can be used among the techniques of a core back expansion molding method. Accordingly, even if the equipment is modified, it is necessary that at least the equipment part to move the mold (move backward) be kept as it exists.

"A core back expansion molding method" is the method that a compound blowable in a resin by a chemical reaction, a supercritical fluid that is dissolved in a resin and becomes a gas by evacuation, and so on are dissolved in a resin to be molded, and then the blowable resin thus obtained is charged into a mold, and then the resin is molded by blowing and expanding with expanding the mold volume. It is known as the molding method capable of obtaining a molded article having good physical properties in spite of a low density. Generally, this expansion of the mold volume is carried out by moving one half of the mold; and thus, the means, the equipment, and so on of the method is applicable to the present invention. Accordingly, because of the foregoing reasons, it is preferable that Step (2) mentioned above be carried out by modifying the equipment used for a core back expansion molding method, if necessary.

Explanation is made by using FIG. 1; after transparent resin A is injection molded in FIG. 1 (B), mold 14a is moved upward in the case of FIG. 1 (C). Then, space 15 is formed on transparent resin A having the graphic. Thereafter, transparent resin B is injection molded in the space by injecting from injection gate 21 arranged on mold 14a. Alternatively, it is also preferable that transparent resin B be injection molded simultaneously with the upward movement of mold 14a to make a space into which the resin is injected. In the present invention, it is natural that use of the same equipment does not necessarily mean transparent resin B is blowable; rather, the resin is preferably unblowable in view of keeping its transparency.

The reason why the graphic by an in-mold decoration method looks extraordinarily beautiful resides in that the graphic is seen through thickness of the transparent resin. In other words, in the case that a graphic is transcribed to backside of the transparent resin, the graphic can be seen most beautifully with a sense of depth, a three-dimensional appearance, a premium looking, and the like. However, contrary to a housing part and the like of a mobile phone, which is seen only from one side, a chair is seen from above and bottom of the seat part and from front and back of the backrest part, namely, from both sides. That is, a chair is a product not having a front side and a back side. Accordingly, the graphic can be seen from any side of front, back, above, and bottom of a chair with a sense of depth, a three-dimensional appearance, a premium looking, and the like by injection molding of transparent resin A in Step (1) and transparent resin B in Step (2) to sandwich a graphic between transparent resin A and transparent resin B.

In FIG. 1, injection gate 21 to inject transparent resin A (first layer) and injection gate 21 to inject transparent resin B are different; but as shown in FIG. 5, the second layer may be molded by the same gate 21 as the first layer, and the method using the same gate is preferable because a general molding machine can be used. In FIG. 1, each injection gate 21 of Step (1) and Step (2) is located in the different surface sides of the plane; but the gate may be located in the side (the thick part), as shown in FIG. 5, which location is preferable because roughness and convex portion 22 due to injection gate 21 does not remain on the surface side of the seat part and the backrest part. If the gate is located on the front side, a hip, a waist, a back, and so on of a user may contact to convex portion 22 due to injection gate 21; or if the gate is located on the back side, it may be easily seen so that the appearance is not good. In other words, it is preferable that there be only one common gate for injection gate 21 to inject transparent resin A in Step (1) and transparent resin B in Step (2) and that the gate be located in the side of the foregoing substrate.

As mentioned above, injection gate 21 is preferably located in the side (the thick part); but, as shown in FIG. 5, particularly preferable if it is located in the side (the thick part) in front of the knee because this part is most unnoticeable. That is, it is particularly preferable that there be only one common gate for injection gate 21 to inject transparent resin A in Step (1) and transparent resin 8 in Step (2) and that the gate be located in the side of the substrate in front of the seat part. In FIG. 5, the lower left of the figure having projections for attachment of legs is the bottom side of the graphic chair while the lower right of the figure is the front side of the graphic chair. In FIG. 5, convex portion 22 due to gate 21 is located in front of the chair, namely in the thick part in front of the knee; and convex portion 22 due to injection gate 21 is cut off from the produced chair in FIG. 5 (4).

The present invention has an object to provide for the first time a chair having a personalized design to a customer by the system of producing various kinds of products in small lots, wherein cost-cut per one chair becomes possible by changing a film having a printed graphic without changing an expensive mold which needs cost in making each form. Accordingly, in some cases the foregoing object may only be achieved in terms of cost by using an equipment for the existing core back expansion molding method, or by using an equipment simultaneously to carry out the method of the present invention and the core back expansion method within a company; in this aspect, in the foregoing Step (2), it is preferable to use an equipment for a core back expansion molding method by modifying the equipment if necessary.

To realize the effects of the present invention as mentioned above, "the graphic" in the present invention is preferably the one designed by a customer of "the graphic chair" of the present invention or the one selected by a customer among those designed for individual customers by a supplier of the graphic chair.

The substrate that constitutes at least any one of the seat part and the backrest part or both is made of transparent resin A and transparent resin B so that the graphic may be seen from any of the above and the bottom of the substrate that constitutes "a graphic chair"; accordingly, "a graphic chair" of the present invention is beautiful so that an excellent design may become possible.

In FIG. 3, examples of the graphic chair of the present invention having the foregoing effects of the present invention are shown.

### Example

Hereinafter, the present invention will be explained in more detail by Examples and Comparative Example; but the present invention is not limited to these Examples unless outside the scope of the present invention.

### Example 1

### Step (1)

As a test, a rolled film having a printed graphic is placed in a mold to partially transcribe the graphic to a relatively flat part of the mold, (FIG. 4 (1)), and then colorless and transparent polycarbonate resin was injection molded to form the first layer (FIG. 4 (2)). The first layer had thickness of 3 mm in the seat part at the center and 1.8 mm in the surrounding part.

### Step (2)

The mold half to which the graphic was transcribed (core) was slid backward (to the left in FIG. 4) to form a space for the second layer. Into this space was injection molded the same colorless and transparent polycarbonate resin to form the second layer (FIG. 4 (3)). The second layer had thickness of 3 mm in the seat part at the center and 1.8 mm in the surrounding part. Thereafter, the product was taken out and a film run off from the periphery was removed (FIG. 4 (4)).

A nearly satisfactory product, whose graphic was sandwiched between the first layer and the second layer, with solving the problems of the present invention thereby expressing the effects of the present invention as mentioned before, could be obtained. The chair thus obtained had total thickness of 6 mm at the waist part (central part) and 3.6 mm in the surrounding part, as the sum of the first layer and the second layer.

In Example 1, for injection molding of the second layer, an equipment for the core back expansion molding method was modified and used; but it is apparent that the same results can be obtained even if such equipment is not used.

### Example 2

### Step (1)

Film 12 having a printed graphic was placed between mold 14a and mold 14b, which are corresponding to the seat part and the backrest part, respectively (FIG. 5 (1)), and then a colorless and transparent polyester resin (Eastman-Durastar; manufactured by Eastman Chemical Corp.) as transparent resin A was injected through injection gate 21 to obtain injection molded first layer 19 on one side of the graphic (FIG. 5 (2)).

### Step (2)

Transcribed graphic 14a was moved backward (to the right in FIG. 5 (3)) so that space 15 might be made for injection molding of second layer 20 of transparent resin B. As transparent resin B, the same colorless and transparent polyester resin as transparent resin A was injected into this space through injection gate 21, the same as the gate for transparent resin A in Step (1), to obtain injection molded second layer 20 (FIG. 5 (3)).

Thereafter, the graphic chair product was taken out from the mold, and an extra film run off from the periphery and convex portion 22 due to gate 21 were removed (FIG. 5 (4)). Total thickness of the graphic chair thus obtained was 6 mm in average in the central part of entire chair and 3.5 mm in average in the surrounding part of entire chair, as the sum of the first layer and the second layer.

A satisfactory graphic chair, whose graphic was sandwiched between the first layer and the second layer, with solving the foregoing problems of the present invention thereby expressing the effects of the present invention as mentioned before, could be obtained. There was only one injection gate 21, and in addition, the gate was located in the side of the substrate in front of the knee and between the first layer and the second layer (central part in the thickness direction of the substrate); and thus, the trace after removal of convex portion 22 due to injection gate 21 was not relatively noticeable.

As shown in FIG. 6, when holes 23 are formed in film 12 having a printed graphic, transparent resin A and transparent resin B are connected and adhered through holes 23 (see FIG. 6(3) and (4)); and thus, even when a force is loaded to the completed graphic chair, peeling-off of the substrate at film 12 can be prevented from occurring. In other words, strength of the substrate can be increased.

### Comparative Example 1

In Example 1, a graphic chair having the first layer with the thickness of 6 mm in the back part (central part) and 1.8 mm in the surrounding part was manufactured without forming the second layer. That is, the total thickness was made equal to that of Example 1.

The graphic on the side not having the second layer was easily peeled-off so that the graphic was deformed, resulting in an extremely poor chair in design character.

### Industrial Applicability

In the past, designing elements of a chair have resided only in "a form (mold) and a color (material)"; but owing to development of a graphic chair obtained by the manufacturing method of the present invention, designing elements of a chair changes to the graphic printed therein, not residing in a form and a color. This means that a chair becomes, for example, the same existence as a T-shirt; no one seeks a design value of a T-shirt in its form and sewing, but rather in a design (graphic and picture) printed on a T-shirt.

One big characteristic of the graphic chair obtained by the manufacturing method of present invention resides in that a new market, which did not exist so far, can be opened up particularly in a commercial space and an interior market having high fashionability. For example, a chair used in commercial premises such as a fast food store, a show room, and a restaurant, can be by itself a message medium for corporate promotion, or a chair can exist as a part of decoration by integration with interior of a commercial space.

In other words, a graphic chair made by the manufacturing method of the present invention can provide a chair having a personalized design; and thus, the chair can be widely used by a customer who seeks a chair having a unique design, and the method for manufacturing a graphic chair of the present invention can be widely utilized by a chair designer.

The present application is based on Japanese Patent Application No. 2008-286144 filed to Japanese Patent Office on November 7, 2008; and all the contents contained therein are cited here and incorporated as the disclosure of the description of the present applied invention.

## Claims

1. A method for manufacturing a graphic chair, whose at least any one of a seat part and a backrest part or both consist(s) of a substrate having a configuration of both sides of the graphic sandwiched by transparent resin A and transparent resin B, wherein the substrate is obtained by carrying out Step (1) in which a film having the printed graphic is inserted into a mold at the time of injection molding of transparent resin A and then the graphic printed on the film is transcribed to surface of transparent resin A in the mold, simultaneously with injection molding of transparent resin A , and thereafter carrying out Step (2) in which a mold half to which side the film having the printed graphic is inserted is moved backward to form a space between the mold and the graphic on transparent resin A and then transparent resin B is injection molded in the space.

2. The method for manufacturing a graphic chair according to claim 1, wherein the graphic is the one designed by a customer of the graphic chair or the one selected by a customer among those designed for individual customers by a supplier of the graphic chair.

3. The method for manufacturing a graphic chair according to claim 1 or 2, wherein there is only one common injection gate for injection of transparent resin A in Step (1) and for injection of transparent resin B in Step (2) and the gate is located in the side of the substrate.

4. The method for manufacturing a graphic chair according to any one of claim 1 to 3, wherein Step (2) is carried out by using an equipment for a core back expansion molding method.

5. The method for manufacturing a graphic chair according to any one of claim 1 to 4, wherein a hole is made in the film having the printed graphic to be inserted into the mold at the time of injection molding so that transparent resin A and transparent resin B may be connected and adhered thorough the hole.

6. The method for manufacturing a graphic chair according to any one of claim 1 to 5, wherein the graphic can be seen from any side, from top and from bottom, of the substrate that constitutes the graphic chair.

7. The method for manufacturing a graphic chair according to any one of claim 1 to 6, wherein the graphic is not substantially exposed to surface of any side of the substrate that constitutes the graphic chair so that the graphic may not be worn out by a usual use condition of the chair.

8. A graphic chair **characterized in that** the chair is manufactured by using the method for manufacturing a graphic chair according to claim 1 to 7.
